(19)

Europäisches
Patentamt
European
Patent Office
Office européen
des brevets

(11)  **EP 2 919 351 A1**

(12)  **EUROPEAN PATENT APPLICATION**

(43) Date of publication:
16.09.2015  Bulletin 2015/38

(51) Int Cl.:
*H02J 3/14* (2006.01)

(21) Application number: **14159698.1**

(22) Date of filing: **14.03.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Siemens Schweiz AG**
**8047 Zürich (CH)**

(72) Inventors:
• **Lehmann, Thomas, Dr.**
**91052 Erlangen (DE)**

• **Reinschke, Johannes, Dr.**
**90425 Nürnberg (DE)**
• **Mujagic, Elvis, Dr.**
**8048 Zürich (CH)**

(74) Representative: **Maier, Daniel Oliver et al**
**Siemens AG**
**Postfach 22 16 34**
**80506 München (DE)**

(54)  **Power management system**

(57)  A power management system comprising at least one load controller (11) configured to store and to change at least one load table (12), the at least one load controller (11) is configured to send at least one load table (12) to an at least one automation level controller (5), the at least one automation level controller (5) is configured to give instructions (10) about loads to be disconnected, the at least one automation level controller (5) is configured to prioritise instructions (10) based on at least one load table (12) received from the load controller (11), the power management system further comprises at least one utility interface controller (15) configured to send energy price indicatons (16) to the at least one load controller (11), wherein the at least one load controller (11) is configured to dynamically change at least one load table (12) based on energy price indications (16).

FIG 1

EP 2 919 351 A1

**Description**

Background

The present disclosure relates to an improved power management system. The present disclosure focuses on optimum comfort inside a building while at the same time factoring in constraints of a power grid. The power management system disclosed herein balances the conflicting requirements of comfort inside a building and of minimum cost of energy supply.

Power management systems may be employed in residential, commercial, or industrial buildings. The primary purpose of a power management system is optimum comfort for its users. Eventually, constraints related to the cost of energy supply and to the stability of a power grid may incite building managers to deviate from optimum comfort.

For technical reasons, suppliers of large quantities of (electric) power usually take time to start up their typically non-renewable plants. The power output of these plants may vary within a limited range only. Likewise, any reduction in power output is also a relatively slow process. To remain financially viable, large power plants tend to operate at or near optimum efficiency. Yet power plants with gas-turbines have the capacity to start up and to stop faster than other types of plants.

Transmission of electric energy also has its limitations. A power line can only transfer electric energy up to its maximum rating. Also, transmission of electric energy entails losses that grow with the distance of power transmission. Due to the above limitations, power from regional supply peaks cannot readily be transferred over hundreds of kilometers to pump storage plants. For the same reason, any conversion of large amounts of electric energy into storage mediums such as hydrogen or methane does, at present, not seem financially viable.

It is thus anticipated that large power plants even in combination with renewable sources will in the short term not be able to cope with demand peaks. To overcome this technical challenge, it is envisaged to connect and to disconnect local and more flexible albeit less efficient power supplies. Plants fired with biogas and plants with conventional gas-turbines are typical examples of suppliers with improved flexibility.

Smart grids are yet another approach to handle demand response. Smart grids essentially handle peak demand and/or low supply by creating incentives, so that users lower individual demands when required. These incentives predominantly come in terms of cost.

Especially in de-regulated energy markets, large customers with an annual consumption above 100,000 kWh typically benefit from supply contracts that are based on intervals of 15 minutes. These intervals from the basis for calculating cost. The cost of supply is in such cases made up of several components. First, the total amount of energy per year is multiplied with a given price per kWh. Second, an amount is payable based on the peak demand in any 15 minutes interval throughout the year. Third, government charges and taxes are added to the aforementioned amounts.

Especially in large industrial or commercial sites, the customer may have to inform the supplier in advance about his demand for any 15 minutes interval. Should the customer's demand exceed a given threshold, a penalty will be payable to the utility.

The above issues may be addressed through a technique known as peak demand limiting. This technique focuses on lowering the cost of supply through a reduction of peak load. Peak demand limiting will bring cost benefits, if the demand for energy of a given building over time varies sufficiently. The technique does typically not lower overall consumption. Instead, parts of the demand for energy are delayed. It seems worth stressing that peak load limiting does not shift demand as per a pre-arranged schedule. The technique rather delays demand for energy in accordance with the momentary constraints of the system. To date, peak demand limiting is an "ad hoc" approach to cut demand peaks and cost.

Peak demand limiting requires that elements of the demand, which are also referred to as loads, can be shifted backwards or forward in time. The technique has the capacity to factor in additional power supplies. In the context of peak demand limiting, these additional supplies are commonly referred to as negative loads.

Peak demand limiting also requires synchronism between the energy metering on the client's side and the energy metering on the utility's side. The length of typical metering intervals may vary. Typical intervals are 15 minutes.

A power management system with peak demand limiting will normally rely on central unit that provides synchronism between the client's measurements and the utility's measurements. The central unit also anticipates demand. For the purpose of load management, the system relies on anticipated demand and on a plurality of load tables.

The load tables include details of individual loads such as their priority, rated power, maximum number of on/off operations per day, minimum and maximum on/off times etc. Each detail corresponds to a binary or numerical parameter. Priority values may, for instance, vary between 1 and 100, wherein 1 is the lowest priority and 100 is the highest priority. A low priority value implies that a load will be disconnected at a relatively early stage. A high priority value implies that disconnecting a load ought to be avoided. A minimum on-time is typically given in minutes. A minimum on-time specifies the minimum time span during which a load has to remain switched on.

The power management system tries to balance supply and demand at fixed intervals. The system may, for instance, run its calculations every 5 seconds or every 60 seconds. The entire process is repeated as often as necessary. Upon completion of its calculations, the power management system connects and disconnects loads so as to achieve an optimum configuration of loads in the building. The system may also connect or disconnect negative loads such as diesel generators or biogas fired plants.

The aim of the present disclosure is at least to mitigate the aforementioned difficulties and to provide an advanced power management system that meets the aforementioned requirements.

Summary

The power management system disclosed herein is configured to dynamically modify load tables. To that end, the power management system is connected to a plurality of meters. The system obtains measurements that correspond to individual loads or to groups of loads. These measurements are used to update load tables dynamically, i.e. during operation. That way, load management relies on actual measurements rather than on settings provided by an operator.

Peak demand limiting normally focuses on momentary constraints of the system. The power management system as disclosed herein shall factor in medium-term and long-term scheduling. To that end, the system shall be capable of dynamically altering the priorities laid down in the load tables.

The above problems are resolved by a power management system according to the main claim of this disclosure. Preferred embodiments of the present disclosure are covered by the dependent claims.

It is also an object of the present disclosure to provide a power management system that may support a power grid during times of peak demand. To that end, the system monitors the cost of energy on the market. As soon as this price exceeds a given threshold, the priorities of negative thresholds are dynamically set to 1. In other words, the power management system is configured to start up extra generation capacities when required.

It is a related object of the present disclosure to provide a power management system that considers short-term forecasts when altering the priorities of local negative loads. In other words, the system has the capacity to connect and to disconnect photovoltaic installations depending on demand, on cost of energy and on also the weather forecast.

It is another object of the present disclosure to provide a power management system that offers benefits not only during peak demand. Instead, users and operators shall also benefit when demand is down. Loads such as chargers of electric vehicles are preferably connected to the supply whenever overall demand is low.

Brief description of the drawings

Various features will become apparent to those skilled in the art from the following detailed description of the disclosed non-limiting embodiments. The drawings that accompany the detailed description can be briefly described as follows:

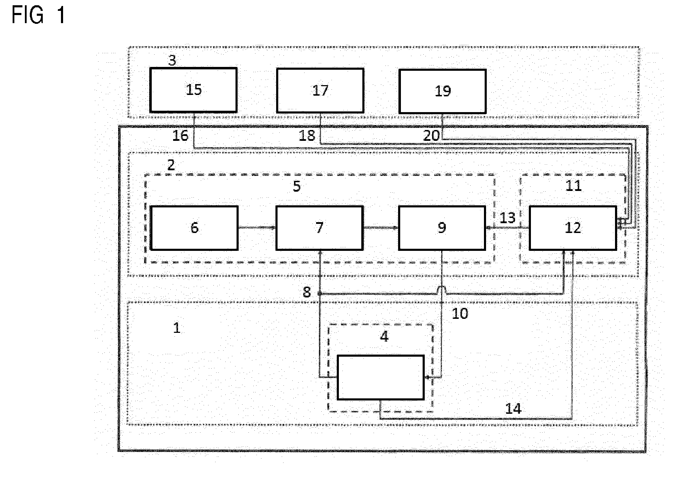

FIG 1 is a block diagram providing a general overview of the components of the building automation system.

Detailed description

FIG 1 gives an overview of a power management system according to this disclosure. The power management system is made up of three levels. These are a field level 1, an automation level 2, and a management level 3.

On the field level 1, a controller 4 controls and measures loads. The controller 4 is configured to directly or indirectly connect and disconnect loads. The controller 4 is also configured to directly or indirectly meter loads connected to the controller. In a preferred embodiment, there will be a plurality of controllers, each controller corresponding to a particular (group of) load(s) or to a particular part of a building. It also seems worth stressing that the load connected to the controller 4 may be a negative load such as a photovoltaic installation.

On the automation level 2, another controller 5 comprises a utility module 6. The utility module 6 provides synchronism between the metering on the utility's side and on the client's side. The utility module 6 synchronises time slots of duration $\Delta t$. Each time slot starts ends at a point in time T and starts at a point in time T - $\Delta t$. The time slots have same durations $\Delta t$, same starts T - $\Delta t$ and same ends T on the client's side and on the utility's side.

The utility module 6 communicates synchronised time slots to the demand prediction module 7. The demand prediction module 7 is also connected to the controller 4 on the field level. The field controller 4 communicates instantaneous load measurements 8 to the demand prediction module 7.

The demand prediction module 7 then sends predicted values of demand P(T - $\Delta t$) at the start of a time slot and at the end of a time slot P(T) to a demand management unit 9. The demand management unit 9 makes decisions about loads to be connected or to be disconnected. To this end, the demand management unit 9 sends commands 10 to the field controller 4. The field controller 4 then executes these commands 10 by directly or indirectly carrying out switching operations for individual loads.

The decisions made by the demand management unit 9 are based on load tables. Yet another controller 11 on the automation level 2 provides a plurality of load tables 12. The controller 11 feeds priority levels 13 and/or other load table data corresponding to a load to the demand management unit 9. In the context of the present disclosure, priority levels 13 are generated dynamically.

To dynamically alter priority levels, the controller 11 receives current values of positive and of negative loads 14 from the field controller 4. The controller 4 also sends values of instantaneous load 8 to the controller 11 that provides the load tables 12.

On the management level 3, a utility interface 15 sends instantaneous prices 16 of energy to the controller 11 with the load tables 12. In a preferred embodiment, the instantaneous price 16 of energy is a real price signal in cents/kWh for a specific time interval. The utility interface 15 may as well send other price-related indications 16 to the controller 11 with the load tables 12. In particular, the utility interface 15 may send a price forecast 16 to the controller 11 with the load tables 12.

A forecast module 17 is the interface between the power management system and the (local) weather forecast. The forecast module 17 sends values of expected negative load (from photovoltaic installations) 18 to the controller 11.

A scheduler 19 is also arranged on the management level 3. The scheduler 19 provides the controller 11 with anticipated values of load 20 at a given time. In other words, the scheduler 19 provides anticipated values of positive load 20 while the forecast module 17 provides anticipated values of negative load 18.

The power management system as disclosed herein differs from existing solutions in that the load tables change dynamically. The field controller 4 sends up-to-date information about instantaneous loads 14 to the controller 11. The controller 11 then forwards updated load tables to the demand management unit 9. Consequently, the demand management unit 9 decides whether to connect or disconnect certain loads based on actual measurement values. This approach offers distinct advantages in case a particular appliance generates significantly higher load than expected. The system then makes its decision based on actual measurements and not based on data provided by an operator. Depending on priority, the demand management unit 9 would disconnect the appliance with significantly higher load rather than exceeding a previously agreed threshold of peak demand.

The system may also pick up an increase of load of an appliance with time. In case the power intake of an appliance increases over time, that particular appliance may be considered defective. The power management system will in this case indicate on the management level 3 that an appliance should be scheduled for maintenance or for replacement.

The controller 11 is also capable of dynamically updating priority levels 13. This feature may prove useful when the price of energy on the market 16 rises above a pre-defined threshold. Let $p(t_0)$ be an instantaneous price of energy, $p_{RERP}$ be a threshold value, $r_{NOM}$ be a default priority level. A dynamically generated priority level $r_{DYN}$ then reads

$$r_{DYN} = \begin{cases} 1 & if \ p(t_0) > p_{RERP} \\ \left(\dfrac{1 - r_{NOM}}{p_{RERP}}\right) \cdot \ p(t_0) + \ r_{NOM} & if \ p(t_0) \leq p_{RERP} \end{cases}$$

This piecewise function implies that a priority level $r_{DYN}$ is set to the highest priority 1 whenever the price of energy $p(t_0)$ exceeds a given threshold $p_{RERP}$. Likewise, a dynamically generated priority level $r_{DYN}$ will approach its nominal value $r_{NOM}$ in case $p(t_0) = 0$. The priority value $r_{DYN}$ will be in between 1 and $r_{NOM}$ whenever $0 \leq p(t_0) \leq P_{RERP}$.

The above relationship may become even more sophisticated by considering another threshold $p_{MERP}$. $p_{MERP}$ is now a minimum threshold and prioritization starts at prices above $p_{MERP}$. With all other symbols as above, an adequate approach to dynamic priorities $r_{DYN}$ then reads

$$r_{DYN} = \begin{cases} 1 & if \ p(t_0) > p_{RERP} \\ \left(\dfrac{r_{NOM} - 1}{p_{MERP} - p_{RERP}}\right) \cdot \ p(t_0) + 1 - \left(\dfrac{r_{NOM} - 1}{p_{MERP} - p_{RERP}}\right) \cdot \ p_{RERP} & if \ p_{MERP} \leq p(t_0) \leq p_{RERP} \\ r_{NOM} & if \ p(t_0) < p_{MERP} \end{cases}$$

The dynamic priority $r_{DYN}$ is the highest priority level 1 whenever the instantaneous price $p(t_0)$ is above the first threshold $p_{RERP}$. Likewise, the dynamic priority value $r_{DYN}$ equals its nominal value $r_{NOM}$ whenever the instantaneous price $p(t_0)$ is lower than the second threshold $p_{MERP}$. Finally, the dynamic priority $r_{DYN}$ will vary between 1 and $r_{NOM}$ in

EP 2 919 351 A1

case $p_{MERP} \leq P(t0) \leq p_{RERP}$.

These two relationships are particular embodiments that are particularly useful when the power grid is overloaded. The imbalance of supply and demand will then lead to a rise in energy prices. The priority levels of negative loads such as diesel generators are set to 1 whenever it becomes financially attractive to feed energy into the grid. Priority levels may also be altered whenever the power grid is overloaded. Additional suppliers in the form of diesel generators will in this case help stabilize the grid.

The present example of negative loads of diesel generators also shows the thresholds $p_{MERP}$ and $p_{RERP}$ may be differ depending on the type of (negative) load. At a given price level, it may be financially interesting to start up diesel generators while biogas-plants are not cost-effective yet. This sequence can actually be reversed depending on operational characteristics of these plants. In a preferred embodiment, the thresholds $p_{MERP}$ and $p_{RERP}$ for different load types are stored in (separate) load tables 12.

It seems worth noting that the instantaneous price of energy $p(t_0)$ and/or the threshold value $p_{RERP}$ may actually become negative. In the case $p(t_0) < 0$, a client would be paid for having energy delivered to his building. It would, for instance, be highly desirable for an end client to be paid while charging his electric vehicle. The above relationships are then modified in order to prioritize loads such as chargers for electric vehicles during hours of negative energy price.

On the management level 3, the scheduler 19 allows for an integration of medium-term and long-term planning into the power management system. Normally, a power management system focuses on avoiding excessive demand in every 15 minutes interval. In other words, the power management system focuses on the short-term. The controller 11 with the load tables 12 does, however, also receive information 20 from the scheduler 19. The time horizon of the scheduler 19 is typically longer than 15 minutes. In a particular embodiment, the controller 11 uses scheduled load values 20 to add small corrections to the priority levels 13. The controller 11 may also subtract small corrections. Due to the scheduler 20, there can be an albeit limited influence of medium-term and long-term planning on the instructions 10 given by the system.

The forecast module 17 fulfills a similar function in view of negative loads.

Any steps of a method according to the present application may be embodied in hardware, in a software module executed by a processor, in a cloud computing arrangement, or in a combination of these. The software may include a firmware, a hardware driver run in the operating system, or an application program. Thus, the invention also relates to a computer program product for performing the operations presented herein. If implemented in software, the functions described may be stored as one or more instructions on a computer-readable medium. Some examples of storage media that may be used include random access memory (RAM), read only memory (ROM), flash memory, EPROM memory, EEPROM memory, registers, a hard disk, a removable disk, other optical disks, or any available media that can be accessed by a computer or any other IT equipment and appliance.

It should be understood that the foregoing relates only to certain embodiments of the invention and that numerous changes may be made therein without departing from the spirit and the scope of the invention as defined by the following claims. It should also be understood that the invention is not restricted to the illustrated embodiments and that various modifications can be made within the scope of the following claims.

Reference numerals

1    field level

2    automation level

3    management level

4    field level controller

5    automation level controller

6    synchronisation unit

7    demand prediction module

8    instantaneous load measurements

9    demand management unit

5

10   instructions

11   controller

12   load tables

13   dynamic priority values (and other dynamically generated data)

14   information about instantaneous loads

15   utility interface

16   instantaneous prices

17   forecast module 17

18   expected negative load

19   scheduler

20   anticipated values of load at a given time


**Claims**

1. A power management system comprising
   at least one load controller (11) configured to store at least one load table (12),
   the at least one load controller (11) is configured to send at least one load table (12) to an at least one automation level controller (5),
   the at least one automation level controller (5) is configured to give instructions (10) about loads to be disconnected and/or about loads to be connected,
   the at least one automation level controller (5) is configured to prioritise instructions (10) based on the at least one load table (12) received from the load controller (11),
   wherein the power management system further comprises
   at least one utility interface controller (15) configured to send energy price related indications (16) to the at least one load controller (11),
   wherein the at least one load controller (11) is configured to dynamically change the at least one load table (12) based on energy price indications (16).

2. The power management system according to claim 1, wherein the at least one automation level controller (5) is configured to give instructions (10) about loads to be disconnected to an at least one field controller (4).

3. The power management system according to any of the claims 1 to 2, wherein the power management system further comprises at least one scheduler controller (19) configured to send anticipated values of positive load (20) to the at least one load controller (11),
   and wherein the at least one load controller (11) is configured to dynamically change at least one load table (12) based on anticipated values of positive load (20).

4. The power management system according to any of the claims 1 to 3, wherein the power management system further comprises at least one forecast controller (17) configured to send anticipated values of negative load (18) and/or weather forecast data (18) to the at least one load controller (11),
   and wherein the at least one load controller (11) is configured to dynamically change at least one load table (12) based said anticipated on values of negative load (18) and/or based on said weather forecast data (18).

5. The power management system according to claim 2, wherein the field controller (4) is configured to meter loads.

6. The power management system according to claim 5, wherein the field controller (4) is configured to send load metering data (14) to the at least one load controller (12), and wherein the at least one load controller (11) is configured to dynamically change at least one load table (12) based on said load metering data (14).

7. The power management system according to any of the claims 2, 5, or 6, wherein the field controller (4) is configured to directly or indirectly connect and/or to disconnect loads.

8. The power management system according to any of the claims 2, 5, or 6, wherein the automation level controller (5) further provides a demand prediction module (7) configured to receive load measurement data (8) from the field controller (4).

9. The power management system according to any of the claims 1 to 8, wherein the at least one automation level controller (5) is configured to prioritise instructions (10) at regular intervals.

10. The power management system according to any of the claims 1 to 9, wherein the at least one automation level controller (5) is configured to prioritise instructions (10) every 15 minutes.

11. The power management system according to any of the claims 1 to 10, wherein the automation level controller (5) provides a utility module (6), and wherein said utility module (6) synchronises an internal clock of the power management system to an external reference.

12. A residential, and/or commercial, and/or industrial building with the power management system according to any of the previous claims.

13. A method for managing power, the method comprising the steps of
sending at least one load table (12) from a load controller (11) to an automation level controller (5),
prioritizing instructions (10) about loads to be disconnected based on said at least one load table (12),
giving instructions (10) about loads to be disconnected,
wherein the method further comprises the steps of
sending energy price indications (16) at least one utility interface controller (15) to said load controller (11),
dynamically changing the at least one load table (12).

14. The method according to claim 14, wherein instructions (10) about loads to be disconnected and/or to about loads to be connected are sent to a field controller (4).

15. A non-transitory, tangible computer readable medium having instructions executable by a processor for performing the method according to any of the claims 13 to 14 when said instructions are executed.

FIG 1

Europäisches
Patentamt

European
Patent Office

Office européen
des brevets

# EUROPEAN SEARCH REPORT

Application Number

EP 14 15 9698

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DE 198 17 191 A1 (FRANK THOMAS [DE]) 21 October 1999 (1999-10-21) * column 2, line 60 - column 6, line 652 * | 1-9, 12-15 | INV. H02J3/14 |
| Y | DE 199 32 833 A1 (NODUS GMBH [DE]) 25 January 2001 (2001-01-25) * page 5, line 9 - page 6, line 16 * | 1-9, 12-15 | |
| Y | US 4 551 812 A (GURR GEORGE P [US] ET AL) 5 November 1985 (1985-11-05) * column 4, line 29 - column 16, line 4 * | 1-9, 12-15 | |
| Y | US 5 696 695 A (EHLERS GREGORY A [US] ET AL) 9 December 1997 (1997-12-09) * column 2, line 34 - column 28, line 17 * | 1-10, 12-15 | |
| Y | US 5 414 640 A (SEEM JOHN E [US]) 9 May 1995 (1995-05-09) * column 3, line 43 - column 15, line 47 * | 1-9, 12-15 | |
| Y | WO 2012/006644 A2 (ATB AUTOMATISIERUNGSTECNIK GMBH & CO KG [AT]; EDTMAIR JOACHIM [AT]; BE) 19 January 2012 (2012-01-19) * pages 6-7, 14, lines 27, 28, 17 - page 16, line 27 * | 1-10, 12-15 | TECHNICAL FIELDS SEARCHED (IPC) H02J |
| Y | DE 10 2008 040272 A1 (BOSCH GMBH ROBERT [DE]) 14 January 2010 (2010-01-14) * paragraphs [0007], [0026] * | 1-10, 12-15 | |
| Y | DE 100 62 027 A1 (SIEMENS AG [DE]) 11 July 2002 (2002-07-11) * paragraph [0038] - paragraph [0041] * | 1-10, 12-15 | |

The present search report has been drawn up for all claims

| Place of search | Date of completion of the search | Examiner |
|---|---|---|
| Munich | 1 July 2014 | Jonda, Sven |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 14 15 9698

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2014

| Patent document cited in search report | | Publication date | Patent family member(s) | | Publication date |
|---|---|---|---|---|---|
| DE 19817191 | A1 | 21-10-1999 | AT | 317171 T | 15-02-2006 |
| | | | DE | 19817191 A1 | 21-10-1999 |
| | | | EP | 1072081 A1 | 31-01-2001 |
| | | | WO | 9954984 A1 | 28-10-1999 |
| DE 19932833 | A1 | 25-01-2001 | NONE | | |
| US 4551812 | A | 05-11-1985 | NONE | | |
| US 5696695 | A | 09-12-1997 | AT | 182038 T | 15-07-1999 |
| | | | AU | 699197 B2 | 26-11-1998 |
| | | | AU | 4746796 A | 24-07-1996 |
| | | | BR | 9600042 A | 16-09-1997 |
| | | | CN | 1183860 A | 03-06-1998 |
| | | | DE | 69603155 D1 | 12-08-1999 |
| | | | DE | 69603155 T2 | 03-02-2000 |
| | | | EP | 0801836 A2 | 22-10-1997 |
| | | | IL | 116637 A | 20-06-1999 |
| | | | JP | 3090475 B2 | 18-09-2000 |
| | | | JP | H10510138 A | 29-09-1998 |
| | | | NZ | 301932 A | 28-01-1999 |
| | | | US | 5572438 A | 05-11-1996 |
| | | | US | 5684710 A | 04-11-1997 |
| | | | US | 5696695 A | 09-12-1997 |
| | | | WO | 9621264 A2 | 11-07-1996 |
| US 5414640 | A | 09-05-1995 | NONE | | |
| WO 2012006644 | A2 | 19-01-2012 | AU | 2011279543 A1 | 21-02-2013 |
| | | | CA | 2805648 A1 | 19-01-2012 |
| | | | CN | 103155332 A | 12-06-2013 |
| | | | EA | 201390126 A1 | 30-05-2013 |
| | | | EP | 2594003 A2 | 22-05-2013 |
| | | | JP | 2013538387 A | 10-10-2013 |
| | | | US | 2013211609 A1 | 15-08-2013 |
| | | | WO | 2012006644 A2 | 19-01-2012 |
| DE 102008040272 | A1 | 14-01-2010 | AT | 544218 T | 15-02-2012 |
| | | | CN | 102089951 A | 08-06-2011 |
| | | | DE | 102008040272 A1 | 14-01-2010 |
| | | | EP | 2301129 A2 | 30-03-2011 |
| | | | US | 2011160874 A1 | 30-06-2011 |
| | | | WO | 2010003730 A2 | 14-01-2010 |
| DE 10062027 | A1 | 11-07-2002 | NONE | | |

EPO FORM P0459

For more details about this annex : see Official Journal of the European Patent Office, No. 12/82